# EUROPEAN PATENT APPLICATION

(11) **EP 1 403 038 A1**
(43) Date of publication of application: **31.03.2004**
(21) Application number: 02079012.7
(22) Date of filing: 27.09.2002
(51) Int. Cl.: B32B 27/32, B29C 51/14, B29C 70/82

(54) **Method for reinforcing an article and reinforced article**

(71) Applicant: LANKHORST INDUTECH B.V., NL-8607 AD Sneek (NL)
(72) Inventor: Jacobs, Johannes Antonius Joseph, 8447 EB Heerenveen (NL); Bloemhof, Fokke, 8521 DH Sint Nicolaasga (NL)
(74) Representative: Prins, Adrianus Willem

(57) **Abstract**

The present invention relates to a method for reinforcing an article comprising attaching to at least one surface of said article a tape, film or yarn of a drawn thermoplastic polymer. The present invention further relates to a reinforced article and to the use of a polymeric material, in particular a thermoplastic material for improving mechanical properties of an article. The reinforced articles can be used in a variety of areas, including the medical field, off-shore industry and transportation sector.

## Description

The invention relates to a method for reinforcing an article, to a reinforced article and the use of a polymeric material for improving mechanical properties of an article.

In composite materials yarns and cloths are often used for reinforcing by incorporating the yarn or cloth into a resin that is subsequently cured. Most commonly used are glass fibre materials. However, glass fibre materials have the disadvantage that they have a high density and thus tend to contribute significantly to the weight of the article. Furthermore, glass fibres make it very difficult to recycle the materials in which they are incorporated. It would be very useful if the glass fibres could be replaced by polymeric fibres or other polymeric reinforcement components, thereby making it easier to recycle the composite materials.

With respect to recycling of the products produced from polyolefin films, tapes and yarns it would be an advantage if all components of the material could be classified as the same material, such as polypropylene or polyethylene (including copolymers and blends thereof wherein propylene respectively ethylene forms the majority of the monomeric units). The advantage thereof would be that the resulting recycled material would still be one material, instead of a blend of various components (no contamination).

It has now been found that articles can be reinforced with a polymeric tape, film or yarn.

Accordingly, the present invention relates to a method for reinforcing an article comprising attaching to at least one surface of said article a tape, film or yarn of a drawn thermoplastic polymer.

An article thus reinforced has been found to have interesting mechanical properties such as improved stiffness, improved mechanical strength and/or improved impact resistance. Accordingly, the present invention also relates to the use of a tape, film or yarn as defined herein for improving the mechanical strength, the stiffness and/or the impact resistance of an article.

Further the reinforcing material is a light-weight material in comparison to glass. In a method according to the invention, it has been found possible to achieve a comparable effect, with respect to impact resistance, stiffness and/or mechanical strength, with a smaller amount of tape, film or yarn in terms of weight or even in terms of volume (thickness of the layer).

A surprising property of the treated material is the good abrasion resistance of the surface.

The tape, film or yarn is relatively easy to employ in comparison to reinforcement techniques wherein a reinforcing material, e.g. a fibrous material is used that is incorporated into a material that is subsequently formed into a shaped article. In the latter case the reinforcing material has to be included as part of the manufacturing process of the article, whereas the present invention allows application at the surface of a article, that may already have been shaped before applying the reinforcing material. This is also advantageous in view of recycling, since it allows easier separation of the reinforcing material from the article, which may be desired in particular if articles are provided with a tape, film or yarn and the article are made of materials of different classes. Of course such separation is not always required, e.g. in case the article is made of essentially the same type of material as the reinforcing material.

The invention further relates to a method wherein a reinforced article provided with a tape film or yarn of a drawn thermoplastic polymer at at least one surface of the article is recycled.

The tape, film or yarn may be attached to the article in any way, e.g. by gluing, by bonding through heat treatment and/or by bonding through pressure treatment. The tape, film or yarn can be applied as such to a surface of the article, for example by winding or by laying. Very good results have been achieved with a method wherein the tape, film or yarn is applied to the surface in the form of a woven or non-woven cloth. The cloth may comprise one or more layers of tape, film or yarn. The cloth may be made in any way. Particularly suitable methods include weaving, knitting, and multiaxial stitch bonding. Such methods are commonly known in the art. Optionally the cloth is compacted. By compacting, the tapes, films or yarns are bonded together and thus stiffness is improved, not only in the direction of the material. For economic reasons it is preferred to compact the material after it has been placed on the article to be reinforced.

It has been found that the use of a cloth has a particularly advantageous effect upon suppression of the fragmentation of an article when it is subjected to a high impact, e.g. due to a collision or an explosion.

In principle, an article that is reinforced in accordance with the invention can be made of any material, it may e.g. comprise wood, metal (e.g. aluminium), a thermosetting polymer and/or a thermoplastic polymer (e.g. polyester, PVC and/or a polyolefin). A method according to the invention is in particular suitable to reinforce an article comprising a solid thermosetting or thermoplastic material. Very good results have been achieved with a article at least consisting of a thermoplastic material, in particular a polyolefin. Preferably said article comprises a thermoplastic material of essentially the same composition as said tape, film or yarn.

The tape, film or yarn can be formed of any drawn thermoplastic material. Particularly suitable examples include tapes, film and yarns described in PCT/NL02/00487 and high tenacity polypropylene.

Particularly suitable examples of commercially available tapes, films and yarns include Superprof® (Lankhorst-Indutech B.V., Sneek, the Netherlands). A particularly suitable example of a commercially available woven cloth is Geolon^{TM} (Ten Cate, the Netherlands)

Very good results have been achieved with a monoaxially drawn thermoplastic polymer having a total stretch ratio (TSR) of more than 12, preferably of more than 15, in particular in the range of 20-50. TSR is defined as the degree of stretching from an isotropic melt to the final tape or film. This is at least in part defined by the difference in speed between the stretch rollers. The actual value of the TSR can be determined from the birefringence and/or the E-Modulus of the final film, tape or yarn (in stretching direction). In case a tape, film or yarn of the AB or ABA type is used (see below), the TSR applies especially to the central layer, which preferably is a highly crystalline material. The material of the outer layer will generally be less crystalline. The function of the outer layer is especially the provision of the possibility to attach the tape, film or yarn suitably to the article and/or to weld the films, tapes, fibres or yarns together when a woven, non-woven or staple/stack of the material is heat treated and/or pressure treated.

Highly advantageous in a method according to the invention is a tape, film, or yarn having an E-modulus of at least 5 GPa, preferably of at least 10 GPa, more preferably of at least 12.5 GPa, e.g. in the range of 15-17 GPa. The E-modulus as used herein is the value as measured by ISO 527.

The tensile strength is not particularly critical. Good results have inter alia been obtained with a tape, film or yarn having a tensile strength of at least 0.25 GPa. (value as measured by ISO 527).

The skilled professional will know how to choose a suitable material for the tape, film or yarn, based on the information disclosed herein an his common general knowledge. Particularly suitable materials include polyesters and polyolefins. Preferably the tape, film or yarn comprises a polyolefin, more preferably polyethylene, polypropylene, a copolymer thereof or a blend thereof.

Highly advantageous with respect to reinforcement characteristics and/or the ease of attaching the tape, film or yarn is a method according to the invention wherein the tape, film or yarn- preferably in the form of a woven or non-woven cloth - is a drawn thermoplastic polymer of the AB or ABA type substantially consisting of a central layer (B) of a first thermoplastic polymer and one or two other layers (A) of a second thermoplastic polymer, the DSC melting point of the material of the said other layers (A) being lower than the DSC melting point of the material of the said central layer (B).

Layer(s) A and layer B are preferably classified as the same material (in terms of being suitable to be recycled together), such as polypropylene or polyethylene (including copolymers and blends thereof wherein propylene respectively ethylene forms the majority of the monomeric units). An advantage thereof is that the resulting recycled material can still be regarded as one material, instead of a blend of various components. Thus contamination of the recycled material can be kept to a minimum.

The thermoplastic polymer of the AB or ABA type is preferably monoaxially drawn.

Preferably between 50 and 99 wt.%, more preferably between 60 and 90 wt.% of the material of the tape, film or yarn is formed of central layer (B). The balance of the material consists of the outer layers (A).

Preferably, both layer B and layer(s) A are made of the same class of material, more preferably they each essentially consist of a polymer selected from the group of polyolefines, even more preferably they each essentially consist of a polymer selected from the group of polyethylenes, polypropylenes, copolymers thereof and blends thereof.

In case of the use of polypropylene as the material for the film, tape, yarn or fibre, the material for the central, or core, layer B will preferably be a homopolypropylene, preferably having a relatively high molecular weight, such as a weight average molecular weight (MW) of at least 250 000 g/mol, as determined gel permeation chromatography (GPC), and a melting temperature of at least 160°C.

It is to be noted that the central layer preferably consists of one material only, but that in case of recycle of production scrap, minor amounts of the material of the other layer may also be present in the core layer. This will generally not exceed 10 wt.%.

In an embodiment wherein the core layer (B) is a polypropylene, the material of the outer layers in this embodiment is, as indicated above, also a polypropylene, preferably a copolymer of propylene with ethylene or another α-olefin. An important aspect thereof is that the softening point of the material, generally indicated by the DSC melting point as defined in ISO 11357-3 is lower than the softening point of the central layer, the difference being at least 10°C. The maximum difference between softening points of the layer B and the layer(s) A is not particularly critical. For practical reasons, the difference will usually be less than about 70 °C. Very good results have inter alia been achieved with a film, tape or yarn wherein the difference in softening points is in the range of 15-40 °C.

Very good results have been achieved with a random copolymer, such as a propylene-ethylene random copolymer, as the outer layer(s) A. Instead of a copolymer or in combination therewith, a polyolefin, preferably a polypropylene homopolymer or polypropylene copolymer , prepared by making use of a metallocene catalyst is used as the outer layer(s) A. Particular good results have been achieved with such a metallocene based statistical polymer. A suitable example of a metallocene is rac-[Me2Si(2-Me-4-(1-Naphtyl)Ind)2]ZrCl2 H. (described in H. Brintzinger, D. Fischer, R.Mülhaupt, B. Rieger, R. Waymouth, Angew. Chem. 107 (1995) 1255 and in W. Kaminsky, Macromol. Chem. Phys. 197 (1996) 3907).

In practice, a tape, film or yarn of the AB or ABA type is preferably used in a form where the films, tapes or yarns are at angle to each other (woven, non-woven materials). In case such a tape, film or yarn is formed into a woven cloth, a non-woven cloth, a stacked material or a stapled material the outer layer can be used to weld together the individual films, yarns or tapes to create a composite material of very high structural integrity. By selecting the softening point at a sufficiently large distance from the softening point of the central layer, it is possible to have a heat treatment which does not impair the properties of the material itself.

In a preferred method of the invention, the outer layer or layers A at least consist of a ethylene propylene copolymer, having an ethylene content of between 75 mol % and 99 mol % and a propylene content of between 1 and 25 mol.%. Particular good results have been achieved with such an outer layer or layers in an embodiment wherein the central layer B is a polyethylene.

In a preferred method of the invention the outer layer(s) A at least consist(s) of a propylene ethylene copolymer, having an ethylene content of between 1 and 25 mol.% and a propylene content of between 75 mol % and 99 mol %, in particular if the central layer is a polypropylene. Such a copolymer (as outer layer(s) A), in particular such a random copolymer, has been found to adhere highly satisfactorily to the central layer. Further a composite of tape, yarn or film comprising such a copolymer has been found to have a very good strength, impact resistance and abrasion resistance. It is also possible to use blends of two of these materials.

In case of the use of polyethylene, basically the same considerations apply. As the central layer an HDPE is preferably used, i.e. a polyethylene having a density of at least 950 kg/m³. The weight average molecular weight (MW), as determined by GPC, is preferably at least 250 000 g/mol and the melting point is 130°C or higher. It is to be noted that the central layer preferably consists of one material only, but that in case of recycle of production scrap, minor amounts of the material of the other layer may also be present in the core layer. This will generally not exceed 10 wt.%.

The material of the other layer is characterised in that it will also be a polyethylene, but now with a lower melting point, the difference being at least 10°C. Suitable polyethylenes are random or block ethylene copolymers, LLDPE, LDPE, VLDPE and the like.

For both types of layer materials it is to be noted that in practice they will generally contain conventional additives, including but not limited to dyes and pigments, flame retarders, UV-stabilisers, anti-oxidants, carbon black and the like.

It is an option of the general approach to the present invention that each of the outer layers at itself consists of two or more separate layers. It is also possible that in the three-layer configuration (ABA), the two outer layers have a slightly different composition.

In practice, the thickness of the tape, film or yarn will generally be up to 300, preferably between 25 and 300 µm. This is governed by the original film thickness and the stretch ratio, in this case the ratio of the speed of the stretch rollers. The width of the tapes can vary over a wide range, such as from 25 µm up to 50 cm or more. The width of the films can also vary over a wide range, e.g. from 1 cm up to 150 cm or more.

The tape, film or yarn of the used in accordance with the invention can be from any source. Good results have been obtained with a tape, film or yarn of the AB or ABA type made by co-extruding the various layers. Generally cast extrusion is used, whereby the extruder has a flat dye plate, without profile. When a film is manufactured the material may be stretched, after co-extrusion and cooling the material. In case a tape or yarn is manufactured, the material will be slit into the required width of the individual strands (after co-extrusion and cooling), followed by stretching.

The stretching can be a single stage or a multi-stage stretching. The stretch ratio in each step may be between 1.1 and 50 - preferably in the range of 2 to 10, more preferably in the range of 3 to 8 - the total draw ratio being important for determining the TSR, as defined herein. Very good results, with respect to mechanical properties of the stretched tape, yarn or film, have been achieved in a multi-stage stretching process wherein the stretch ratio in the first stretching stage of the tape, film or yarn is 4-5.

It is preferred to stretch the material at a temperature between 20 and 250°C. Preference is given to stretching at a temperature below the DSC melting point of the material used for the central layer B (herein after "cold stretching"). Very good results have been achieved with a cold-stretching method wherein at least one of the stretching stages are carried out at a temperature below the DSC melting point of the outer layer. In particular for tapes, film and yarns comprising polypropylene and/or polyethylene (including copolymers thereof, very good results have been achieved at a temperature in the range of 25-75 °C, preferably between 30 and 60 °C

In case of multi-stage stretching, the first stretching is preferably carried out a relatively low temperature, more in particular in the range of 30-60 °C, and the subsequent stretching stage or stages are preferably carried at a relatively high temperature, for example at a temperature between 60 °C and the DSC melting point of the outer layer. Thus an a high as possible stretch can be achieved. Good results have been obtained with a subsequent stretching at a temperature of at least 100 °C. It is highly preferred to carry out the subsequent stretching at a temperature at which the stretch ratio until breakage (during the stretching process) is essentially maximised. It has been found that a temperature relatively close to the temperature at which the stretching is maximised, a film, tape or yarn is produced with very good mechanical properties, such as a very high E-modulus. The temperature at which the stretching is maximised can routinely be determined by the skilled person.

Between two stretching steps an annealing step may be included. This can also be done after the final stretching.

As indicated above, the film, tape or yarn can be applied to the article in any way, e.g. by heat bonding (e.g. by applying the tape, film or yarn to the article and then heating the article by forced hot air or in an oven), gluing or pressure bonding. The skilled person will know how to choose suitable conditions, depending upon the nature of the article and the choice of the tape, film or yarn, based upon the teaching of the present description and general common knowledge.

The use of heat-bonding, pressure bonding or a combination thereof is highly preferred. One advantage is the fact that this type of bonding does not require the use of additional materials (e.g. an additional adhesive), which is generally advantageous from a recycling point of view.

Heat-bonding and/or pressure bonding are in particular preferred if the tape, film or yarn is of the AB or ABA type. The pressure bonding can suitably be carried out by vacuum forming or by pressing. In the latter case, the applied pressure may for example be suitably chosen in the range of 20-70 bar.

By this heat and/or pressure treatment the reinforcing material is not only effectively adhered to the article, but the individual films, tapes or yarns may also be welded together. In this way the structural integrity of the reinforcing material will be guaranteed. The said heat and/or pressure treatment will be done at a temperature and pressure, for a suitable period of time that allows the softening of at least the surface of the tape, film or yarn. Thus attachment to the surface of the article is achieved. Furthermore adjacent films, tapes or yarns are bonded to each other, contributing to the reinforcing effect.

In case tapes, film or yarns of the AB or ABA type are used the temperature and pressure are preferably chosen between the softening point (i.e. the temperature at a specific pressure at which the material starts to flow) of the material of the outer layers (A) and the material of the central layer (B).

Preferably the heat treatment is performed in combination with applying a pressure, in particular if the heat treatment involves subjecting a plate-like material or shaped article to a temperature at which the material of the central layer (B) has a tendency to shrink (due to disorientation of the polymer chains to a more random configuration). For example, polypropylene tends to shrink at a temperature above 100-115 °C. Preferably such a pressure is at least 5 bar. Very good results with respect to mechanical properties of the resulting materials have been obtained by compacting the material at a pressure in the range of 20-70 bar.

Alternatively or in combination with applying a pressure, the material may be clamped during heat treatment, in order to avoid shrinking.

A method according to the invention can be used to reinforce all kinds of articles.

For instance a method according to the invention is very suitable for reinforcing parts for use in the automotive/bodywork industry or shipbuilding industry. The present invention has been particularly suitable for reinforcing car doors, mud guards, bumpers, engine covers, the backs of car seats, dash boards. Thus the invention may contribute to make cars more safe (in particular for improving resistance to fragmentation of articles, such as a dash board, after a collision), more resistant to the impact of stones (rubble) (in particular for mud guards) or baggage stored in the car (in particular for the backs of car seats).

With respect to articles for marine yacht building, in addition to the reinforcing effect, the light weight of the tape film or yarn, contributes to a reduction of the metal content and thus reducing the weight of the ship, making it more difficult to sink. Additionally the reduction in metal content makes ships (or other transportation means) more difficult to detect, because recognition systems (e.g. in mines) are generally based on metal detection.

A method according to the invention can very suitably be employed for ballistic reasons, e.g. on vehicles or parts thereof (e.g. car doors); on bomb explosion shells, e.g. to improve the impact resistance; on protective shields; or protective panels for counter protection (e.g. in banks, ticket offices) or wall/facade protection. The invention may also be employed directly to structures such as walls, floors and/or ceilings of buildings to make those more bullet proof.

Examples of applications in the field of building and construction include reinforcement of ladders or scaffolds, made of a polymeric material. Such ladders and scaffolds form a promising alternative to aluminium and wooden ladders and scaffolds, since they are light-weight, they can be made of electrically non-conductive material and/or offer other safety advantages. Other applications in this field include reinforcement of wall- or ceiling- panels and (polymeric) laths and reinforcement of cable-troughs, skirting-boards, beams, girders (e.g. T-sections, 1-sections, X-sections, L-sections), tubes, pipes and the like.

A method according to the invention may also advantageously be employed to reinforce articles for medical purposes, e.g. orthesic articles (e.g. arch supports), cables for surgery, tables for surgery, prostheses, articles for handicapped care (e.g. parts for light-weight wheel chairs).

The invention can also advantageously be used in articles for fluid transportation, e.g. in the water-supply industry, in the gas and/or oil industry, including the off-shore industry, in particular to reinforce pipes or tubes. The invention can also advantageously be used for reinforcing electricity cables or telecommunication cables.

Another field of application is the consumer goods, such as house hold articles, e.g. kitchen- or garden equipment.

The present invention also relates to an article, of which at least one surface is provided with a tape, film or yarn of a drawn thermoplastic polymer as defined herein, such as a reinforced article obtainable by a method as described herein. In particular the invention also relates to an article provided with a tape, film or yarn of a drawn thermoplastic polymer as defined herein, which tape, film or yarn has been compacted.

The invention is now elucidated on the basis of the following examples, which are not to be construed as limiting the invention.

### Example 1

Using a co-extrusion line, a film was prepared consisting of a core layer B of polypropylene having a DSC softening temperature of 152°C and two top layers A of a propylene random copolymer having a DSC softening temperature of 135°C (ABA-structure). The weight ratio A:B:A was 5:90:5.

The film was stretched at 55°C in a ratio of 1:5 followed by stretching at 128°C in a ratio of 1:3.4, thereby producing a stretched film that had a stretch ratio of 1:17 and a thickness of 70 µm.

### Example 2

Tapes, made from a film prepared in a method as described in Example 1 were woven into a cloth. The single-layered cloth was placed onto a "positive" mould for a vacuum form process.

A polyethylene plate (thickness: 2 mm) was heated by infrared until it was sufficiently plastic for use in vacuum forming. Subsequently the plate was drawn over the mould, covered with the cloth, by applying a vacuum to form the article.

Stiffness (E-modulus, bending) was found to be about 20 % higher than in a polyethylene plate (thickness: 2 mm) that had not been reinforced with a cloth. Mechanical strength was found to be about 10 % higher.

## Claims

1. Method for reinforcing an article comprising attaching to at least one surface of said article a tape, film or yarn of a drawn thermoplastic polymer.

2. Method according to claim 1, wherein said article comprises a solid thermosetting or thermoplastic material.

3. Method according to claim 1 or 2, wherein said article comprises a thermoplastic material of essentially the same composition as said tape, film or yarn, which method optionally further comprises recycling the reinforced article.

4. Method according to any of the previous claims, wherein said tape, film or yarn is attached to said article by means of a heat treatment and/or by applying pressure.

5. Method according to any of the previous claims, wherein said tape, film or yarn is in the form a woven or non-woven cloth.

6. Method according to any of the previous claims, wherein said tape, film or yarn comprises a polyester and/or a polyolefin, preferably a polyethylene, a polypropylene or a combination thereof.

7. Method according to any of the previous claims, wherein the tape, film or yarn is a drawn thermoplastic polymer of the AB or ABA type substantially consisting of a central layer (B) of a first thermoplastic polymer and one or two other layers (A) of a second thermoplastic polymer, the DSC melting point of the material of the said other layers (A) being lower than the DSC melting point of the material of the said central layer (B).

8. Method according to any of the preceding claims, wherein said tape, film or yarn is a monoaxially drawn thermoplastic polymer, having a stretch ratio of more than 12 and having an E-modulus of at least 5 GPa, preferably of at least 10 GPa.

9. Method according to claim 7 or 8, substantially consisting of a central layer (B) of a polyolefin selected from polyethylene and polypropylene, and one or two other layers (A) of a polyolefin from the same class as the material of the central layer B, the DSC melting point of the material of the said other layers (A) being lower than the DSC melting point of the material of the said central layer (B), wherein the central layer (B) is between 50 and 99 wt.% of the material and the other layers (A) between 1 and 50 wt.%.

10. Reinforced article obtainable by a method according to any of the previous claims.

11. Article, of which at least one surface is provided with a tape, film or yarn of a drawn thermoplastic polymer as defined in any of the claims 1, 5, or 6-9.

12. Article according to any of the claims 10 or 11, wherein the article is selected from the group consisting of articles for the automotive/bodywork industry (e.g. car doors, mud guards, bumpers, engine covers, dash boards), articles for the building/construction industry (e.g. ladders, scaffolds, wall-panels, ceiling panels, laths, cable-troughs, skirting-boards, beams, girders, tubes, pipes), articles for fluid transportation (e.g. tubes or pipes for the water industry, gas industry, oil industry, including off-shore industry), articles for marine yacht building, articles for ballistic purposes (e.g., protective panels, bomb explosion shells, protective shields, parts for vehicles), articles for medical/para-medical purposes (e.g. orthesic articles, cables, prostheses, tables for surgery, parts for wheel-chairs) and house-hold articles.

13. Use of a tape, film or yarn as defined in any of the claims 1 or 5-9 for improving the mechanical strength, the stiffness and/or the impact resistance of an article.
